## Europäisches Patentamt
## European Patent Office
## Office européen des brevets

(19)

(11) Numéro de publication: **0 152 460**
**B1**

(12) # FASCICULE DE BREVET EUROPÉEN

(45) Date de publication du fascicule du brevet:
**13.01.88**

(51) Int. Cl.⁴: **H 04 N 1/06**

(21) Numéro de dépôt: **84903176.0**

(22) Date de dépôt: **23.08.84**

(86) Numéro de dépôt international:
**PCT/FR 84/00191**

(87) Numéro de publication internationale:
**WO 85/01170 (14.03.85 Gazette 85/07)**

(54) APPAREIL DE NUMERISATION D'IMAGE PAR ANALYSE AU MOYEN D'UN FAISCEAU LUMINEUX.

(30) Priorité: **24.08.83 FR 8313663**

(43) Date de publication de la demande:
**28.08.85 Bulletin 85/35**

(45) Mention de la délivrance du brevet:
**13.01.88 Bulletin 88/2**

(84) Etats contractants désignés:
**AT BE CH DE FR GB LI LU NL SE**

(56) Documents cité:
**DE-A-1 948 854**
**DE-C-482 842**
**FR-A-2 391 612**
**GB-A-1 099 040**
**US-A-2 422 778**
**US-A-4 131 916**

**Telecommunications and Radio Engineering,
volume 25, 26; No. 3, March 1971, Washington (US)
Yu. S. Oganov et al.: "The Gazeta - 2 facsimile set
for newspaper transmission", pages 21-27**

(73) Titulaire: **SOCIETE EUROPEENNE DE
PROPULSION (S.E.P.) Société Anonyme dite:, 3,
avenue du Général de Gaulle, F-92800 Puteaux
(FR)**

(72) Inventeur: **ROSIER, Jean- Claude, Georges, 8,
chemin du Roy Giverny, F-27620 Gasny (FR)**
Inventeur: **FOUCHE, Claude, Guy, 5, rue de la
Dime, Giverny F-27620 Gasny (FR)**
Inventeur: **MAINCENT, Gabriel, François, 13, les
Jardins de Tilly, Tilly F-27510 Tourny (FR)**

(74) Mandataire: **Joly, Jean- Jacques, CABINET BEAU
DE LOMENIE 55, rue d'Amsterdam, F-75008 Paris
(FR)**

EP 0 152 460 B1

### Description

La présente invention concerne un appareil de numérisation d'image par analyse au moyen d'un faisceau lumineux , et plus particulièrement un appareil du type cmportant un disposi .if de fixation d'un support d'image à analyser, au moins une source de lumière, un premier dispositif optique pour projeter sur l'image à analyser un faisceau de lumière provenant de la source, un dispositif de déplacament relatif entre le faisceau et le support d'image pour éclairer successivement, ligne par ligne, les éléments d'image de l'image à analyser, et un convertisseur comprenant un dispositif opto-électrique, pour convertir sous forme numérique les informations représentant les éléments d'image.

Les appareils de numérisation d'image et ceux de restitution d'images numérisées sont utilisés notamment pour la transmission d'image en liaison avec des systèmes de télédétection par satellites.

L'invention notamment a pour but de fournir un appareil permettant l'analyse d'images portées par un support transparent, tel qu'un film.

Ce but est atteint grâce à un appareil du type précité dans lequel, conformément à l'invention :

- le dispositif de fixation comprend un berceau d'analyse transparent en forme de portion de cylindre et destiné à recevoir le support d'image,

- le premier dispositif optique comprend un miroir tournant autour d'un axe confondu avec celui du berceau d'analyse, ledit miroir recevant le faisceau de lumière et le réfléchissant perpendiculairement à la surface du berceau, et

- un deuxième dispositif optique comprenant un miroir elliptique aux foyers duquel sont disposés le miroir tournant et le dispositif opto-électrique reçoit la lumière ayant traversé le berceau d'analyse et le support d'image et renvoie sur une zone photosensible fixe du dispositif opto-électrique la lumière issue des différents éléments d'image d'une même ligne.

Grâce au miroir elliptique, aucune aberration n'est introduite pour tous les éléments d'image de chaque ligne.

L'analyse des lignes successives est réalisée au moyen d'un dispositif de déplacement pas à pas permettant un déplacement en translation axiale du berceau par rapport au miroir tournant et aux dispositifs optiques. La surface réfléchissante du miroir elliptique peut alors être limitée à une bande relativement étroite d'une surface elliptique. Il suffit que la largeur de cette bande permette la réflexion du faisceau analysant une ligne. La construction du miroir elliptique est donc relativement simple et peu coûteuse.

Selon une particularité de l'appareil conforme à l'invention, celui-ci comprend également un berceau de restitution distinct du berceau d'analyse et destiné à recevoir un support pour une image à restituer à partir d'informations modulant le faisceau de lumière issu de la source, les berceaux d'analyse et de restitution étant situés sur une même surface cylindrique et étant solidaires l'un de l'autre, de sorte que les moyens utilisés pour effectuer le balayage ligne et le balayage trame du support d'image à restituer sont les mêmes que ceux utilisés pour le balayage du support d'image à analyser.

Ainsi, un restituteur d'image numérisée et un analyseur d'image à numériser se trouvent combinés en un même appareil.

D'autres particularités et avantages de l'appareil conforme à l'invention ressortiront à la lecture de la description faite ci-après, à titre indicatif, mais non limitatif en référence aux dessins annexés qui illustrent :

- figure 1 : une vue schématique générale d'un mode de réalisation d'un appareil conforme à l'invention, et

- figure 2 : une vue en coupe suivant le plan II-II de la figure 1.

L'appareil représenté sur les dessins comprend un chariot 10 pouvant coulisser le long d'une glissière rectiligne 11a d'une table horizontale fixe 11. Le déplacement du chariot est commandé par un moteur pas à pas (non représenté) qui entraîne en rotation une vis micrométrique 12 en prise avec le chariot 10 .

Le chariot 10 porte une structure 13 de forme générale cylindrique dont la partie supérieure constitue un berceau 14 supporté par deux flasques annulaires 15, 16 qui s'élèvent aux extrémités longitudinales du chariot 10 perpendiculairement à la direction d'avance de celui-ci. Le berceau 14 est destiné à recevoir un support d'image, tel qu'un film 20, portant une image à analyser par transmission en vue de sa numérisation. A cet effet, le berceau 14 est en matériau transparent, par exemple en verre. La forme du berceau 14 est celle d'une portion, située entre deux génératrices, d'un cylindre à section circulaire d'axe 17 parallèle à la direction de déplacement du chariot 10. Le berceau 14 a sa face concave tournée vers la table 11 et des moyens, tels que des pinces (non représentées), permettent de maintenir le film 20 appliqué contre la face extérieure convexe de ce berceau.

Un miroir plan 21 est monté tournant autour de l'axe 17. Le miroir 21 est entraîné par un moteur 22 supporté par la table fixe 11 au moyen d'un bras coudé 23. Une source de lumière 25 engendre un faisceau de lumière 26 qui, éventuellement, après réflexion sur un miroir plan fixe 27, traverse l'ouverture centrale du flasque 16 et se propage en direction du miroir 21, en ayant un axe confodu avec l'axe 17. Le miroir 21 a sa surface réfléchissante inclinée à 45° par rapport à l'axe 17 de sorte que le faisceau 26 est réfléchi en direction normale à la surface cylindrique du berceau 14.

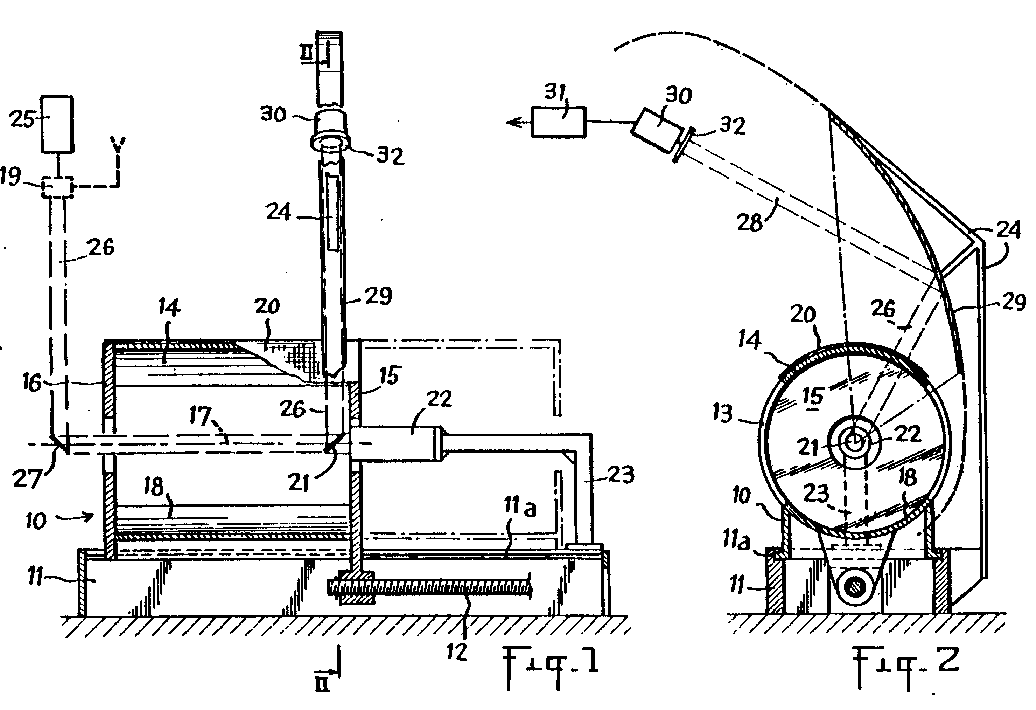

La figure 1 montre le chariot 10 à une des extrémités de sa course sur la table 11. Le miroir 21 se trouve alors au voisinage du flasque 15 pour pouvoir réfléchir le faisceau 26 à proximité d'un des bords transversaux du berceau 14. L'analyse de l'image portée par le film 20 est réalisée en déplaçant le chariot 10 pas à pas d'une extrémité de sa course à l'autre. De façon connue en soi, la rotation du miroir 21 et l'avance du chariot 10 sont synchronisées de manière que, pour chaque position stable du chariot 10 après un pas d'avance, le miroir 21 effectue un tour au cours duquel il éclaire une ligne complète de l'image à analyser, c'est-à-dire une bande transversale étroite du film 20 fixé sur le berceau 14. Au cours du déplacement du chariot 10 à partir de la position montrée sur la figure 1, le moteur 22 et, le cas échéant, une partie au moins de la branche horizontale du bras 23 pénètrent à travers l'ouverture centrale du flasque 15.

Le faisceau de lumière 26 obtenu après traversée du berceau transparent 14 et du film 20 est réfléchi par un miroir 29 en direction d'un dispositif opto-électrique 30. Le miroir 29 est un miroir elliptique, c'est-à-dire possède une surface réfléchissante située sur une portion de surface d'un cylindre droit ayant pour base une ellipse, l'axe de ce cylindre étant parallèle à l'axe 17. La figure 2 est une coupe réalisée suivant le plan transversal médian du miroir 29. La section du miroir est un tronçon d'ellipse E dont les foyers sont le centre du miroir 21 situé sur l'axe 17 et le centre de la surface photosensible du dispositif opto-électrique 30. La figure 2 montre également que le miroir 29 a une surface réfléchissante délimitée par le dièdre ayant pour arête l'axe 17 et contenant les bords longitudinaux du berceau 14. De la sorte, le miroir 29 renvoie le faisceau 28 tout le long du balayage complet d'une ligne du film 20. En direction longitudinale, le miroir 29 a une largeur constante au moins égale au diamètre du faisceau 28. Aussi, il est possible de limiter la surface réfléchissante du miroir à une bande relativement étroite, donc assez simple et peu onéreuse à fabriquer malgré sa forme elliptique. Le miroir 29 est disposé au-dessus du berceau 14, à l'aplomb de l'emplacenent du miroir 21 et est supporté au moyen de montants 24 fixés à la table 11.

Le fonctionnement de l'appareil décrit ci-dessus est le suivant :

L'analyse en noir et blanc est réalisée en utilisant une source laser. L'intensité du faisceau laser est modulée en traversant le film portant l'image à analyser et est transformée en un signal électrique analogique au moyen du dispositif opto-électrique 30 tel qu'un élément du type photodiode ou un tube photomultiplicateur. Ce signal est échantillonné et converti sous forme numérique au moyen d'un convertisseur analoqique numérique 31. La fréquence d'échantillonnage est déterminée en liaison avec la vitesse de rotation du miroir 21 pour le nombre désiré d'éléments d'image numérisés par ligne de l'image analysée. L'utllisation du miroir elliptique 29 permet de n'introduire aucune aberration lors du balayage d'une ligne complète, la lumière issue des différents éléments d'image étant renvoyée en un point unique. Les mots d'information numériques produits en sortie du convertisseur traduisent le niveau de gris des éléments d'image.

Un ajustement de la taille de l'élément d'image analysé est possible en utilisant un diaphragme 32 (figure 2) devant la surface photosensible du dispositif opto-électrique 30, la dimension de ce diaphragme déterminant celle de l'élément d'image P (voir figure 2). Il est possible de prévoir plusieurs diaphragmes précalibrés afin de faire varier les tailles des éléments d'image de manière discrète (par exemple de 10 microns à 100 microns). Bien entendu, le diamètre du faisceau utilisé doit être, au niveau du berceau 14, au moins égal et de préférence supérieur à la taille choisie de l'élément d'image; on pourra utiliser à cet effet un faisceau large légèrement convergent. Par ailleurs, la longueur du pas d'avance du chariot 10 est également ajustée suivant la dimension des éléments d'image. Un même oscillateur de très grande précision, stabilisé par quartz, est utilisé pour commander la fréquence d'échantillonnage de convertisseur et les vitesses des moteurs d'entraînement du chariot 10 et du miroir 21.

L'analyse en couleur est possible en utilisant trois sources laser, par exemple rouge, verte et bleue, dont les faisceaux sont superposés pour éclairer simultanément un même élément d'image. La séparation des différents faisceaux est effectuée en disposant derrière le diaphragme du dispositif opto-électrique un séparateur de couleurs, utilisant par exemple des filtres dichroïques. Les faisceaux séparés sont dirigés vers des organes photorécepteurs (photodiodes ou photomultiplicateurs) affectés chacun à une couleur particulière et associés chacun à un convertisseur analogique-numérique particulier. On dispose ainsi simultanément des mots d'information numériques qui représentent l'analyse d'un élément d'image dans chaque couleur de base.

En variante, un seul organe photorécepteur peut être utilisé en commutant les différentes sources de lumière ; l'analyse est alors effectuée en balayant chaque ligne trois fois de suite, c'est-à-dire une fois pour chaque faisceau de couleur séparément.

Suivant une particularité de l'appareil conforme à l'invention, il comporte en outre un berceau de restitution destiné à recevoir un support pour une image à restituer à partir d'informations numériques. Dans l'exemple illustré, le berceau de restitution 18 est situé à la partie inférieure de la structure cylindrique 13, les berceaux 14 et 18 étant sensiblement symétriques l'un de l'autre par rapport à l'axe 17. Ainsi, la forme du berceau 18 est celle d'une portion comprise entre deux génératrices du même cylindre à section circulaire que celui suivant lequel est disposé le berceau 14, la face concave du berceau 18 étant tournée vers le miroir 21. Le support de l'image à restituer, par exemple un film vierge, est fixé sur la face concave du berceau 18 par des moyens tels que des pinces (non réprésentées). Contrairenent au berceau d'analyse par transmission, le berceau de restitution 18 est réalisé en un matériau opaque.

La disposition du berceau 18 permet d'utiliser pour la restitution les mêmes moyens de balayage ligne (miroir tournant) et de balayage trame (chariot mû pas à pas) que pour l'analyse. Il est également possible d'utiliser la même source de lumière (noir et blanc) ou les mêmes sources de lumière (couleur) que pour l'analyse à ceci près que le faisceau laser issu de la ou chaque source a une intensité modulée en fonction d'informations numériques enregistrées représentant l'image à restituer. A cet effet, un modulateur 19 (représenté en tirets sur la figure 1) est disposé en sortie de la source et est commandé par des signaux vidéo élaborés à partir desdites informations numériques, la commande du modulateur étant synchronisée avec celle des moteurs d'entraînement du miroir 21 et du chariot 10. Pour la restitution d'une image couleur, les faisceaux modulés issus des trois sources sont superposés pour être appliqués simultanément sur le même élément d'image.

## Revendication

1. Appareil de numérisation d'image comportant un dispositif de fixation d'un support d'image à analyser, au moins une source de lumière, un premier dispositif optique pour projeter sur l'image à analyser un faisceau de lumière provenant de la source, un dispositif de déplacement relatif entre le faisceau et le support d'image pour éclairer successivement, ligne par ligne, les éléments d'image de l'image à analyser, et un convertisseur comprenant un dispositif opto-électrique, pour convertir sous forme numérique les informations représentant les éléments d'image, caractérisé en ce que:
- le dispositif de fixation comprend un berceau d'analyse (14) transparent en forme de portion de cylindre et destiné à recevoir le support d'image (20),
- le premier dispositif optique comprend un miroir (21) tournant autour d'un axe confondu avec celui du berceau d'analyse, ledit miroir recevant le faisceau de lumière et le réfléchissant perpendiculairement à la surface du berceau, et
- un deuxième dispositif optique (29, 32) comprenant un miroir elliptique (29) aux foyers duquel sont disposés le miroir tournant (21) et le dispositif opto-électrique (30) reçoit la lumière ayant traversé le berceau d'analyse et le support d'image et renvoie sur une zone photosensible fixe du dispositif opto-électrique (30) la lumière issue des différents éléments d'image d'une même ligne.

2. Appareil selon la revendication 1, caractérisé en ce que le berceau d'analyse (24) est mobile en translation pas à pas par rapport au miroir tournant et au deuxième dispositif optique (29).

3. Appareil selon l'une quelconque des revendications 1 et 2, caractérisé en ce que le deuxième dispositif optique comprend un diaphragme (32) placé devant le dispositif opto-électrique pour déterminer la taille des éléments d'image analysés.

4. Appareil selon l'une quelconque des revendications 1 à 3 pour la numérisation d'une image en couleur, caractérisé en ce qu'il comprend trois sources de couleurs de base dont les faisceaux illuminent simltanément un même élément d'image et en ce que le dispositif opto-électrique comprend des moyens de séparation des différents faisceaux de couleur incidents.

5. Appareil selon l'une quelconque des revendications 1 à 3 pour la numérisation d'une image en couleur, caractérisé en ce qu'il comprend trois sources de couleurs de base commutables pour balayer successivement chaque ligne de l'image par les faisceaux séparés des trois sources.

6. Appareil selon l'une quelconque des revendications 1 à 5, caractérisé en ce qu'il comprend également un berceau de restitution (18) destiné à recevoir un support pour une image à restituer à partir d'informations modulant le faisceau de lumière issu de la source, les berceaux d'analyse (14) et de restitution (18) étant situés sur une même surface cylindrique et étant solidaires l'un de l'autre.

## Patentansprüche

1. Gerät zur Digitalisierung eines Bildes mit einer Vorrichtung zur Fixierung des zu analysierenden Bildes auf einem Träger, mindestens einer Lichtquelle, einer ersten optischen Vorrichtung, um auf das zu analysierende Bild einen Lichtstrahl, der von der Lichtquelle kommt, werfen zu können, einer Vorrichtung zur Relativbewegung zwischen dem Lichtstrahl und dem Bildträger, um sukzessive Linie für Linie die Bildelemente des zu analysierenden Bildes beleuchten zu können und einem Konverter, der eine optoelektrische Vorrichtung aufweist, um die die Bildelemente repräsentierenden Informationen in numerischer Form darstellen zu können, dadurch gekennzeichnet, daß
- die Fixiervorrichtung eine transparente Analysewiege (14) in Form einer Zylinderteilfläche aufweist, die dazu bestimmt ist, den Bildträger (20) aufzunehmen,
- die erste optische Vorrichtung einen Spiegel (21) umfaßt, der um eine mit der Analysewiege zusammenfallende Achse drehbar ist, wobei der Spiegel den Lichtstrahl empfängt und lotrecht auf die Wiegenoberfläche reflektiert und
- eine zweite optische Vorrichtung (29, 32), die einen elliptischen Spiegel (29) aufweist, in dessen Brennpunkten der Drehspiegel (21) und die optoelektrische Vorrichtung (30) auf die das Licht fällt, nachdem es die Analysewiege und den Bildträger durchquert hat, angeordnet ist, und daß das Licht, das von verschiedenen Bildelementen einer Linie ausgesandt wurde, auf eine feste lichtempfindliche Zone der optoelektrischen Vorrichtung (30) fällt.

2. Apparat nach Anspruch 1, dadurch gekennzeichnet, daß die Analysewiege (24) in Längsrichtung Schritt für Schritt bezüglich des Drehspiegels und der zweiten optischen Vorrichtung (29) längsverschieblich ist.

3. Apparat nach einem der Ansprüche 1 und 2, dadurch gekennzeichnet, daß die zweite optische Vorrichtung ein Diaphragma (32) vor der optoelektrischen Vorrichtung aufweist, um die Größe der zu analysierenden Bildelemente zu bestimmen.

4. Apparat nach einem der Ansprüche 1 bis 3, zur Digitalisierung eines Farbbildes, dadurch gekennzeichnet, daß drei Quellen in Grundfarbe vorgesehen sind, deren Lichtbündel simultan ein Bildelement erleuchten und daß die optoelektrische Vorrichtung Mittel zur Trennung der verschiedenen Strahlen der einfallenden Farben aufweist.

5. Apparat nach einem der Ansprüche 1 bis 3, zur Digitalisierung eines Farbbildes, dadurch gekennzeichnet, daß drei Basisfarbquellen austauschbar angeordnet sind, um jede Bildlinie sukzessive durch die Bündel der drei getrennten Quellen abtasten zu können.

6. Apparat nach einem der Ansprüche 1 bis 5, dadurch gekennzeichnet, daß er auch eine Restitutionswiege (18) aufweist, die dazu dient, einen Träger für ein herzustellendes Bild aufzunehmen, welches von Informationen ausgeht, die den von der Quelle ausgehenden Lichtstrahl modulieren, wobei die Analysewiege (14) und die Restitutionswiege (18) auf der gleichen zylindrischen, Oberfläche angeordnet und miteinander verbunden sind.

**Claims**

1. Apparatus for digitalizing an image comprising means for fixing a carrier on an image to be analyzed, at least one source of light, a first optical device for projecting a light beam issued from said source onto the image to be analyzed, means of relative displacement between the beam and the image carrier for successively lighting, line by line, the elements of image of the image to be analyzed, and a converter comprising an optico-electrical device to convert in digital form the information representing the image elements, characterized in that:
- the fixing device comprises a transparent analysis cradle (14) shaped as a portion of cylinder and designed to receive the image carrier (20),
- the first optical device comprises a mirror (21) rotating about an axis which coincides with that of the analysis cradle, said mirror receiving the light beam and reflecting it perpendicularly to the surface of the cradle, and
- a second optical device (29, 32) comprising an elliptic mirror (29) in the focal points of which are placed the pivoting mirror (21) and the optico-electrical device (30), receives the light which has gone through the analysis cradle and the image carrier, and sends back on a fixed photosensitive zone of said optico-electrical device (30) the light issued from the different image elements of one line.

2. Apparatus according to claim 1, characterized in that the analysis cradle (24) is movable stepwise in translation with respect to the pivoting mirror and to the second optical device (29).

3. Apparatus according to any one of claims 1 and 2, characterized in that said second optical device comprises a diaphragm (32) placed at the front of the optico-electrical device to determine the size of the analyzed image elements.

4. Apparatus according to any one of claims 1 to 3, for digitalizing a color image, characterized in that it comprises three sources of basic colors, of which the beams light up simultaneously the same image element and in that the optico-electrical device comprises means for separating the different incident color beams.

5. Apparatus according to any one of claims 1 to 3, for digitalizing a color image, characterized in that it comprises three sources of basic colors, which are switchable for successively scanning every line of the image with the separated beams of three sources.

8. Apparatus according to any one of claims 1 to 5, characterized in that it also comprises a restitution cradle (18) designed to receive a carrier of an image to be restituted from information modulating the light beam issued from the source, the analysis (14) and restitution beams (18) being situated on the same cylindrical surface and being fast with one another.

Fig. 1

Fig. 2

0 152 460